# EUROPÄISCHE PATENTSCHRIFT

(11) **EP 2 317 900 B1**
(45) Veröffentlichungstag und Bekanntmachung des Hinweises auf die Patenterteilung: **10.09.2014**
(21) Anmeldenummer: 09780973.5
(22) Anmeldetag: 23.07.2009
(51) Int. Cl.: A47J 43/04, G01G 5/04

(54) **KÜCHENMASCHINE MIT EINEM MIT MEHREREN FÜSSEN AUSGEBILDETEN BASISTEIL**
KITCHEN APPLIANCE WITH A BASE UNIT HAVING SEVERAL FEET
ROBOT MÉNAGER COMPORTANT UNE BASE MUNIE DE PLUSIEURS PIEDS

(30) Priorität: 25.07.2008 DE 102008040741
(43) Veröffentlichungstag der Anmeldung: 11.05.2011
(73) Patentinhaber: BSH Bosch und Siemens Hausgeräte GmbH, 81739 München (DE)
(72) Erfinder: PACNIK, Roman, 2383 Smartno pri Slovenj Gradcu (SI); POGACAR, Toni, 3311 Sempeter (SI)
(86) Internationale Anmeldenummer: PCT/EP2009/059484
(87) Internationale Veröffentlichungsnummer: WO 2010/010144

(56) Entgegenhaltungen:
- EP-A- 1 123 678
- WO-A-97/17597
- WO-A-03/002953

## Beschreibung

Die Erfindung betrifft eine Küchenmaschine mit einem mit mehreren Füßen ausgebildeten Basisteil, an welchem ein Behältnis zur Aufnahme von Lebensmitteln anbringbar ist, und einer Wägeeinrichtung mit mehreren Sensoren zur Gewichtsbestimmung zumindest des Behälters, wobei jeweils ein Sensor jeweils in einem Fuß angeordnet ist.

Aus der DE 89 05 567 U1 ist eine Küchenmaschine für beliebige Zubereitungsarten wie mixen, rühren, Teig kneten und der gleichen bekannt, welche einen Maschinengrundkörper aufweist, an den Geräte oder Arbeitselemente anbringbar sind. Darüber hinaus umfasst die Küchenmaschine eine zentrale Steuerschaltung, welche den Betriebsablauf steuert. Zur Gewichtsbestimmung von zu be- oder verarbeitenden Nahrungsbestandteilen umfasst die Küchenmaschine ein eingebautes Waagensystem, dessen Messaufnehmer in mindestens einem Fuß des Küchenmaschinengehäuses angeordnet ist. Das Warnsystem ist relativ komplex konzipiert und insbesondere die Messaufnehmer, welche als Druckmessaufnehmer ausgebildet sein können sind im Hinblick auf Anordnung und Ausgestaltung relativ verschleißträchtig und außenseitig am Fuß angeordnet.

Die EP 1123 678A zeigt eine weitere Küchenmaschine.

Es ist Aufgabe der vorliegenden Erfindung, eine Küchenmaschine zu schaffen, bei welcher eine integrierte Wägeeinrichtung verschleißärmer und auch funktioneller ausgebildet werden kann.

Diese Aufgabe wird durch eine Küchenmaschine, welche die Merkmale nach Anspruch 1 aufweist, gelöst.

Eine erfindungsgemäße Küchenmaschine umfasst ein Basisteil, an welchem mehrere Füße angeordnet sind. An dem Basisteil kann ein Behälter zur Aufnahme von Lebensmitteln angebracht werden. Die Küchenmaschine umfasst darüber hinaus eine Wägeeinrichtung mit mehreren Sensoren zur Gewichtsbestimmung zumindest des Behälters und gegebenenfalls des darin enthaltenen Lebensmittels. Jeweils ein Sensor der Wägeeinrichtung ist jeweils in einem der Füße angeordnet. Es wird somit eine Wägeeinrichtung bereitgestellt, welche mit mehreren Sensoren ausgebildet ist, wobei diese jeweils in unterschiedlichen Füßen des Basisteils angeordnet sind beziehungsweise zumindest teilweise darin angeordnet sind. Ein Fuß des Basisteils umfasst ein Gehäuse in welchem der zugeordnete Sensor zumindest teilweise angeordnet ist, und weist darüber hinaus ein Aufstellteil auf, welches mit dem Gehäuse verbunden ist und zum Aufstellen auf einem Untergrund ausgebildet ist. Jeder Fuß ist somit durch zwei funktionell Komponenten gekennzeichnet, zum einen dem Gehäuse zur Aufnahme des Sensors und zum anderen dem Aufstellteil, durch welches es ermöglicht wird, dass die Küchenmaschine sicher auf einem Untergrund positioniert werden kann. Ein Fuß einer Küchenmaschine ist dadurch hochfunktionell ausgebildet und es kann somit auch die positionsoptimierte Anbringung des Sensors der Wägeeinrichtung ermöglicht werden, sodass in diesem Zusammenhang eine verschleißärmere Ausgestaltung ermöglicht werden kann. Darüber hinaus kann durch diese Realisierung auch eine kompaktere Ausgestaltung gewährleistet werden.

Vorzugsweise ist jeder Fuß des Basisteils mit einem Gehäuse und einem Aufstellteil ausgebildet.

Vorzugsweise ist das Gehäuse des Fußes an der Unterseite des Basisteils angeordnet. Es kann im Zusammenhang vorgesehen sein, dass ein Fuß lösbar an dem Basisteil angebracht ist, beispielsweise angeschraubt ist. Es kann jedoch auch eine unlösbare und somit zerstörungsfrei unlösbare Ausgestaltung vorgesehen sein, bei der ein Fuß integral mit dem Basisteil ausgebildet ist.

Das Gehäuse weist zumindest eine Hohlkammer auf, in welche sich der Sensor zumindest teilweise erstreckt. Gerade dies liefert im Hinblick auf die verschleißarme Anordnung und die kompakte Bauform eine besonders vorteilhafte Ausgestaltung. Darüber hinaus kann die individuelle Funktionalität des Sensors dadurch besonders vorteilhaft ermöglicht werden.

In diesem Zusammenhang ist vorgesehen, dass die Hohlkammer mit Flüssigkeit gefüllt ist. Diese ist mit dem Sensor in Kontakt, so dass in vorteilhafter Weise der Sensor in Wechselwirkung mit der Flüssigkeit als Drucksensor ausgebildet ist. Ein Wägevorgang kann dadurch besonders präzise erfolgen. Durch die Ausgestaltung als Drucksensor kann zum einen ein robuster Sensor geschaffen werden, und darüber hinaus eine sichere Sensierung des Gewichts sehr exakt ermöglicht werden. Darüber hinaus kann durch diese Ausgestaltung auch ein relativ kostengünstiger und im Hinblick auf seinen Aufbau relativ einfacher Sensor gewährleistet werden.

Besonders bevorzugt erweist es sich, wenn die Flüssigkeit Öl, insbesondere Silikonöl, ist.

Die Hohlkammer in dem Gehäuse eines Fußes ist insbesondere flüssigkeitsdicht ausgebildet, so dass im Funktionszustand eines Fußes und somit auch der Wägeeinrichtungen keine Flüssigkeit in die Hohlkammer eintreten oder austreten kann. Dadurch kann die Funktionalität besonders hoch gehalten werden und die Messgenauigkeit vergrößert werden.

Insbesondere erweist das Gehäuse eine Einfüllöffnung auf, durch welche die Flüssigkeit eingebracht werden kann. Diese kann vorzugsweise an einer Oberseite des Gehäuses ausgebildet sein, wodurch die Zugänglichkeit und die Handhabbarkeit zur Flüssigkeitseinfüllung sehr einfach ausgebildet ist.

Insbesondere wird diese Öffnung zur Flüssigkeitseinfüllung nach der vollständigen Befüllung der Hohlkammer mit der Flüssigkeit flüssigkeits- und gasdicht verschlossen.

Es kann vorgesehen sein, dass die Hohlkammer des Gehäuses zumindest an einer Seite durch das Aufstellteil begrenzt ist. Das Aufstellteil bildet somit zumindest eine Seitenwand der Hohlkammer. Dadurch kann eine kompakte Bauform des Fußteils erreicht werden.

Insbesondere ist vorgesehen, dass in vertikaler Richtung betrachtet und somit in üblicher Aufstellweise das Gehäuse des Fußes oberhalb des Aufstellteils angeordnet ist. Das Gehäuse des Fußes und das Aufstellteil können unmittelbar miteinander verbunden sein.

In diesem Zusammenhang kann vorgesehen sein, dass die beiden Komponenten, das Gehäuse und das Aufstellteil, separate Teile sind, die miteinander verbunden sind. In diesem Zusammenhang kann auch eine zerstörungsfreie lösbare Verbindung vorgesehen sein. Dadurch kann dann, wenn beispielsweise das Aufstellteil beschädigt oder verschlissen ist, ein einfaches und aufwandarmes Austauschen ermöglicht werden, ohne dass der gesamte Fuß ersetzt werden muss.

Bei einer derartig zerstörungsfreien lösbaren Verbindung zwischen dem Gehäuse und dem Aufstellteil kann eine ineinander greifende und flüssigkeitsdichte Ausgestaltung vorgesehen sein, wobei in diesem Zusammenhang verschiedenste Profilgebungen mit Nuten und der gleichen möglich sind.

Ebenso kann jedoch auch vorgesehen sein, dass das Aufstellteil so an das Gehäuse angebunden ist, das es keine unmittelbare Seitenwand der Hohlkammer des Gehäuses bildet. Die Hohlkammer ist in diesem Fall vollständig durch Wände des Gehäuses begrenzt.

Ebenso kann jedoch auch vorgesehen sein, dass der Fuß einstückig ausgebildet ist und somit das Gehäuse und das Aufstellteil als ein einziges gefertigtes Teil realisiert sind.

Der Sensor, welcher in dem Gehäuse des Fußes zumindest teilweise angeordnet ist, ist so positioniert, dass er sich mit elektrischen Kontakten durch eine Öffnung in der Oberseite des Gehäuses aus der Hohlkammer erstreckt. Insbesondere ist der Sensor an der Innenseite der Hohlkammer angeordnet, besonders vorteilhaft an der Deckenwand des Gehäuses positioniert.

Gerade bei der Montage an der Deckenwand kann dies im Hinblick auf die vertikale Anordnung und die zum Messen des Gewichts vertikal wirkende Gewichtskraft besonders exakt mit dem Funktionsprinzip des Drucksensors über den Sensor und die in der Hohlkammer befindliche Flüssigkeit ermöglicht werden.

Die Flüssigkeit soll insbesondere eine für die Realisierung eines Drucksensors geeignete Viskosität aufweisen. Das oben bereits genannte Beispiel eines Silikonöls weist eine derartig geeignete Viskosität auf.

Vorzugsweise ist vorgesehen, dass das Aufstellteil hohl und nach unten hin offen ist. Insbesondere kann bei dieser Ausgestaltung ein rotationssymetrisches Paraboloid vorgesehen sein. Durch diese Realisierung ist es möglich, dass dann, wenn das Aufstellteil auch zumindest aus einem flexiblen Material, wie einem vulkanisierten Elastomer oder der gleichen ausgebildet ist, die besonders sichere Positionierung und Aufstellung der Küchenmaschine gewährleistet werden kann. Denn durch Andrücken der Küchenmaschine auf den Untergrund kann eine Verformung der Aufstellteile der Füße erreicht werden und über den nach unten hin offenen Hohlraum quasi ein Vakuum erzeugt werden, so dass sich ein Ansaugen der Aufstellteile an den Untergrund ergibt. Das Aufstellteil kann somit quasi auch als Saugknopf bezeichnet werden.

Besonders bevorzugt ist vorgesehen, dass die Küchenmaschine zumindest drei Füße aufweist, welche an dem Basisteil angeordnet sind, wobei in jedem Fuß ein Sensor der Wägeeinrichtung angeordnet ist. Insbesondere ist die Positionierung der Füße so vorgesehen, dass sie in Form eines Dreiecks, insbesondere eines gleichschenkligen Dreiecks an dem Basisteil angeordnet sind. Die Wägefunktionalität kann dadurch besonders gut realisiert werden. Auch unzentrierte Aufstellungen des Behälters auf dem Basisteil ermöglichen bei einer derartigen Ausgestaltung eine noch sehr genaue Ermittlung des Gewichts.

Die Küchenmaschine umfasst vorzugsweise ein Rührwerk, mit dem Lebensmittel wie Teig oder der gleichen im Behälter gemixt, gerührt oder geknetet werden können.

Ein Ausführungsbeispiel der Erfindung wird nachfolgend an Hand schematischer Zeichnungen näher erläutert. Es zeigen:
- Fig. 1: eine schematische Darstellung einer Küchenmaschine in einer Seitenansicht; und
- Fig. 2: eine Schnittdarstellung eines Ausführungsbeispiels eines Fußes der Küchenmaschine gemäß Fig. 1.

In den Figuren werden gleiche oder funktionsgleiche Elemente mit den gleichen Bezugszeichen versehen.

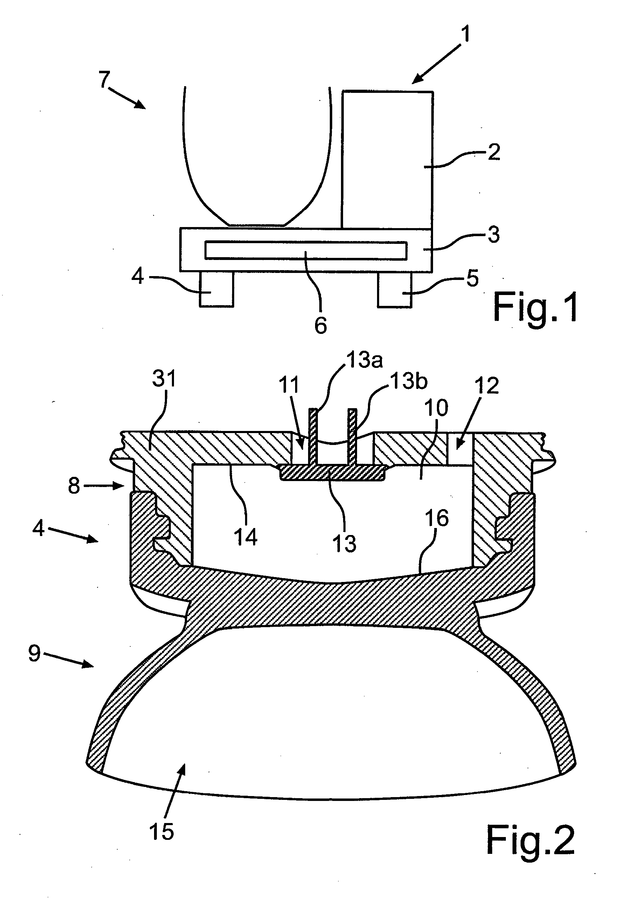

In Fig. 1 ist in einer skizzenhaften und schematischen Darstellung eine Küchenmaschine 1 gezeigt, welche beispielsweise auf einer Arbeitsplatte in einer Küche aufgestellt werden kann und zum Zubereiten von Lebensmitteln vorgesehen ist. Die Küchenmaschine 1 kann beispielsweise zum Rühren von Zutaten, beispielsweise für einen Kuchen oder der gleichen vorgesehen sein. Darüber hinaus kann die Maschine auch zum Kneten von Teig oder zum Mixen von verschiedenen Zutaten vorgesehen sein.

Dazu fasst die Küchenmaschine 1 beispielhaft ein Bedienteil 2, an welchem ein oder mehrere Bedienelemente, eine Anzeigeeinheit und der gleichen angebracht sein können. Des Weiteren umfasst die Küchenmaschine 1 ein Basisteil 3, auf dem das Bedienteil 2 angeordnet ist. Das Basisteil 3 umfasst eine Mehrzahl von Füßen 4 und 5, im Ausführungsbeispiel sind drei Füße vorgesehen, mit der eine Küchenmaschine 1 auf einem Untergrund aufgestellt werden kann. Die Füße 4 und 5 können integral mit dem Basisteil 3 ausgebildet sein. Es kann jedoch auch vorgesehen sein, dass die Füße 4 und 5 zerstörungsfrei lösbar an dem Basisteil 3 montiert sind.

Die Küchenmaschine 1 umfasst darüber hinaus eine Wägeeinrichtung 6, welche im gezeigten Ausführungsbeispiel mit Teilkomponenten in dem Basisteil 3 angeordnet ist. Die Wägeeinrichtung 3 umfasst im Ausführungsbeispiel drei Sensoren, von denen jeweils einer zumindest teilweise in einem der drei Füße 4 und 5 angeordnet ist.

Darüber hinaus umfasst die Küchenmaschine 1 einen Behälter 7, welcher ein Rührwerk umfassen kann oder in den ein Rührwerk hineingreifen kann. In dem Behälter 7 können Lebensmittel eingefüllt werden, um diese mit dem Rührwerk zu bearbeiten.

Der Behälter 7 kann auf dem Basisteil 3 aufgestellt werden. Dadurch kann auch die Gewichtsbestimmung des Behälters 7 und der darin gegebenenfalls enthaltenen Lebensmittel mit der Wägeeinrichtung 6 geeignet erfolgen.

In Fig. 2 ist eine vergrößerte Darstellung eines Fußes 4 in einer Schnittansicht gezeigt. Die weiteren beiden Füße der Küchenmaschine 1 sind analog dazu ausgebildet.

Der Fuß 4 umfasst ein Gehäuse 8 und ein Aufstellteil 9. In der gezeigten Ausführung sind das Gehäuse 8 und das Aufstellteil 9 separate Komponenten, welche zusammengesetzt sind. Das Gehäuse 8 und das Aufstellteil 9 sind in der gezeigten Ausführung aus unterschiedlichen Materialien ausgebildet, wobei das Gehäuse 8 aus einem relativ hartem Kunststoff konzipiert ist, wohingegen das Aufstellteil 9 zumindest bereichsweise aus einem elastischen Material, wie einem vulkanisierten Elastomer, ausgebildet ist. In dem Gehäuse 8 ist eine Hohlkammer 10 ausgebildet, wobei an der Oberseite des Gehäuses 8 eine zentrale Öffnung 11 und eine benachbart dazu ausgebildete erweiterte Öffnung 12 ausgebildet sind. Durch die erste Öffnung 11 erstreckt sich ein der Wägeeinrichtung 6 zugeordneter Sensor 13 mit seinen elektrischen Kontakten 13a und 13b. Der Sensor 13 ist somit zumindest teilweise in dem Gehäuse 8, insbesondere der Hohlkammer 10, angeordnet, wobei er an der Deckenwand 14 des Gehäuses 8 montiert ist.

In der Hohlkammer 10 ist eine Flüssigkeit, insbesondere Silikonöl, eingefüllt, so dass die Hohlkammer 10 vollständig mit der Flüssigkeit gefüllt ist. Diese Flüssigkeit wird über die Öffnung 12 eingefüllt, wobei nach dem Befüllen die Öffnung 12 gas- und flüssigkeitsdicht abgedichtet wird.

Die Hohlkammer 10 ist in gezeigtem Ausführungsbeispiel gemäß Fig. 2 einerseits durch Wände des Gehäuses 8 und andererseits an ihrem Boden 16 durch das Aufstellteil 9 begrenzt.

Es kann auch vorgesehen sein, dass die Hohlkammer 10 vollständig in dem Gehäuse 8 ausgebildet ist und somit ausschließlich durch Wände des Gehäuses 8 begrenzt ist.

Die Verbindung zwischen dem Gehäuse 8 und dem Aufstellteil 9 ist gemäß der beispielhaften Darstellung in Fig. 2 durch Ineinandergreifen verschiedener Stege und Nute in der Außenkontur des Gehäuses 8 und der Innenkontur des Aufstellteils 9 gebildet. Dadurch kann einerseits eine mechanisch stabile Verbindung geschaffen werden und andererseits diese Verbindung gasdicht und flüssigkeitsdicht realisiert werden.

Das Aufstellteil 9 ist an seinem unteren Bereich mit einem Hohlraum 15 ausgebildet und weist an diesem unteren Bereich eine einem Rotationsparaboloid ähnliche Formgebung auf. Gerade in diesem unteren Bereich, in dem der Hohlraum 15 ausgebildet ist, ist das Aufstellteil 9 flexibel beziehungsweise elastisch realisiert. Der Hohlraum 15 ist nach unten hin offen ausgebildet, so dass beim Aufstellen der Küchenmaschine 1 auf einem Untergrund und einem gewissen Andrücken beziehungsweise Anpressen auf dem Untergrund das Aufstellteil 9 verformt wird und sich in dem Hohlraum 15 ein Vakuum bildet, sodass dieses Aufstellteil 9 an dem Untergrund angesaugt ist.

Selbstverständlich kann auch vorgesehen sein, dass ein Fuß 4 einstückig ausgebildet ist, wobei dann das Gehäuse 8 und das Aufstellteil 9 als ein Stück konzipiert sind. Ebenso kann jedoch sowohl bei der Ausgestaltung der Fig. 2 als auch bei der einstückigen Ausgestaltung vorgesehen sein, dass das Aufstellteil 9 relativ starr ausgebildet ist und eine Funktionalität ähnlich einem Saugnapf nicht gegeben ist.

Ebenso kann vorgesehen sein, dass das Oberteil 31 des Gehäuses 8 integraler Bestandteile des Basisteils 3 ist.

Es kann somit auch eine Realisierung vorgesehen sein, bei der das Gehäuse 8 zumindest teilweise integraler Bestandteil des Basisteils 3 ist.

Vorzugsweise ist vorgesehen, dass die Steuereinheit und die Auswerteeinheit der Wägeeinrichtung 6 in dem Basisteil 3 angeordnet sind.

Die im Ausführungsbeispiel vorgesehenen drei Füße 4, 5 sind insbesondere in einem gleichschenkligen Dreieck an der Unterseite des Basisteils 3 positioniert. Der Wägevorgang kann bei einer derartigen Anordnung der Füße 4, 5 auch dann relativ exakt erfolgen, wenn der Behälter 7 unsymmetrisch auf dem Basisteil 3 aufgestellt ist.

## Patentansprüche

1. Küchenmaschine mit einem mit mehreren Füßen (4, 5) ausgebildeten Basisteil (3), an welchem ein Behälter (7) zur Aufnahme von Lebensmitteln anbringbar ist, und mit einer Wägeeinrichtung (6) mit mehreren Sensoren (13) zur Gewichtsbestimmung zumindest des Behälters (7), wobei jeweils ein Sensor (13) jeweils in einem Fuß (4, 5) angeordnet ist, wobei der Fuß (4, 5) ein Gehäuse (8) aufweist, in welchem der zugeordnete Sensor (13) zumindest teilweise angeordnet ist, und ein Aufstellteil (9) umfasst, welches mit dem Gehäuse (8) verbunden und zum Aufstellen auf einem Untergrund ausgebildet ist, **dadurch gekennzeichnet, dass** wobei der Fuß (4, 5) zumindest eine Hohlkammer (10) aufweist, in welche sich der Sensor (13) zumindest teilweise erstreckt, wobei die Hohlkammer (10) mit Flüssigkeit gefüllt ist, und wobei der Sensor (13) in Wechselwirkung mit der Flüssigkeit als Drucksensor ausgebildet ist, wobei der Sensor (13) sich mit elektronischen Kontakten (13a, 13b) durch die Oberseite (31) des Gehäuses (8) aus der Hohlkammer (10) erstreckt.

2. Küchenmaschine nach Anspruch 1, **dadurch gekennzeichnet, dass** das Gehäuse (8) des Fußes (4, 5) an der Unterseite des Basisteils (3) angeordnet ist.

3. Küchenmaschine nach Anspruch 1, **dadurch gekennzeichnet, dass** die Flüssigkeit Öl, insbesondere Silikonöl, ist.

4. Küchenmaschine nach einem der Ansprüche 1 bis 3, **dadurch gekennzeichnet, dass** die Hohlkammer nach der Befüllung mit der Flüssigkeit und im Betrieb (10) der Wägeeinrichtung (6) flüssigkeits- und gasdicht abgedichtet ist.

5. Küchenmaschine nach einem der Ansprüche 1 bis 7, **dadurch gekennzeichnet, dass** die Hohlkammer (10) nach unten hin durch das Aufstellteil (9) begrenzt ist.

6. Küchenmaschine nach einem der vorhergehenden Ansprüche, **dadurch gekennzeichnet, dass** der Sensor (13) an der Innenseite der Deckenwand (14) des Gehäuses (8) angeordnet ist.

7. Küchenmaschine nach einem der vorhergehenden Ansprüche, **dadurch gekennzeichnet, dass** das Gehäuse (8) und das Aufstellteil (9) einstückig ausgebildet sind.

8. Küchenmaschine nach einem der Ansprüche 1 bis 5, **dadurch gekennzeichnet, dass**, das Gehäuse (8) und das Aufstellteil (9) separate Komponenten sind.

9. Küchenmaschine nach einem der vorhergehenden Ansprüche, **dadurch gekennzeichnet, dass** das Aufstellteil (9) hohl und nach unten hin offen ist.

10. Küchenmaschine nach einem der vorhergehenden Ansprüche, **dadurch gekennzeichnet, dass** das Aufstellteil (9) zumindest teilweise elastisch ausgebildet ist.

11. Küchenmaschine nach einem der vorhergehenden Ansprüche, **dadurch gekennzeichnet, dass** zumindest drei Füße (4, 5) an dem Basisteil (3) angeordnet sind und in jedem Fuß (4, 5) ein Sensor (13) der Wägeeinrichtung (6) angeordnet ist.

## Claims

1. Kitchen appliance with a base unit (3) designed with several feet (4, 5), to which base unit (3) a container (7) to accommodate food can be attached, and with a weighing device (6) with several sensors (13) for determining the weight of at least the container (7), wherein respectively a sensor (13) is respectively arranged in a foot (4, 5), wherein the foot (4, 5) has a housing (8) in which the associated sensor (13) is arranged at least partially, and a supporting unit (9) which is connected to the housing (8) and is designed to be placed on a substrate, **characterised in that** the foot (4, 5) has at least one hollow chamber (10), into which the sensor (13) extends at least partially, wherein the hollow chamber (10) is filled with liquid, and wherein the sensor (13) is designed to interact with the liquid as a pressure sensor, wherein the sensor (13) having electronic contacts (13a, 13b) extends through the top (31) of the housing (8) out of the hollow chamber (10).

2. Kitchen appliance according to claim 1, **characterised in that** the housing (8) of the foot (4, 5) is arranged on the underside of the base unit (3).

3. Kitchen appliance according to claim 1, **characterised in that** the liquid is oil, particularly silicone oil.

4. Kitchen appliance according to one of claims 1 to 3, **characterised in that** after being filled with liquid and when the weighing device (6) is in operation the hollow chamber is sealed tight against liquid and gas.

5. Kitchen appliance according to one of claims 1 to 7, **characterised in that** the hollow chamber (10) is limited in the downward direction by the supporting unit (9).

6. Kitchen appliance according to one of the preceding claims, **characterised in that** the sensor (13) is arranged on the inside of the top wall (14) of the housing (8).

7. Kitchen appliance according to one of the preceding claims, **characterised in that** the housing (8) and the supporting unit (9) are integrally formed.

8. Kitchen appliance according to one of claims 1 to 5, **characterised in that** the housing (8) and the supporting unit (9) are separate components.

9. Kitchen appliance according to one of the preceding claims, **characterised in that** the supporting unit (9) is hollow and open in the downward direction.

10. Kitchen appliance according to one of the preceding claims, **characterised in that** the supporting unit (9) is designed to be at least partially flexible.

11. Kitchen appliance according to one of the preceding claims, **characterised in that** at least three feet (4, 5) are arranged on the base unit (3) and a sensor (13) of the weighing device (6) is arranged in each foot (4, 5).

## Revendications

1. Robot ménager comportant une base (3) munie de plusieurs pieds (4, 5) à laquelle un réservoir (7) à denrées alimentaires peut être apposé et un dispositif de pesage (6) avec plusieurs capteurs (13) afin de déterminer le poids au moins du réservoir (7), chaque capteur (13) étant respectivement disposé dans un pied (4, 5), dans lequel le pied (4, 5) présente un carter (8) dans lequel le capteur affecté (13) est au moins partiellement disposé, et englobe une partie de pose (9), laquelle est reliée au carter (8) et exécutée pour la pose sur un support, **caractérisé en ce que** le pied (4, 5) présente au moins une chambre creuse (10) dans laquelle le capteur (13) s'étend au moins partiellement, la chambre creuse (10) étant remplie de fluide et le capteur (13) étant exécuté en interaction avec le fluide sous forme de capteur de pression, le capteur (13) s'étendant via des contacts électroniques (13 a, 13 b) à travers la face supérieure (31) du carter (8) en dehors de la chambre creuse (10).

2. Robot ménager selon la revendication 1, **caractérisé en ce que** le carter (8) du pied (4, 5) est disposé sur la face inférieure de la base (3).

3. Robot ménager selon la revendication 1, **caractérisé en ce que** le fluide est de l'huile, en particulier de l'huile aux silicones.

4. Robot ménager selon l'une des revendications 1 à 3, **caractérisé en ce que** la chambre creuse est étanche au fluide et aux gaz après le remplissage en fluide et durant le fonctionnement (10) du dispositif de pesage (6).

5. Robot ménager selon l'une des revendications 1 à 7, **caractérisé en ce que** la chambre creuse (10) est limitée vers le bas par la partie de pose (9).

6. Robot ménager selon l'une des revendications précédentes, **caractérisé en ce que** le capteur (13) est disposé sur la face intérieure de la paroi supérieure (14) du carter (8).

7. Robot ménager selon l'une des revendications précédentes, **caractérisé en ce que** le carter (8) et la partie de pose (9) sont exécutés en une seule pièce.

8. Robot ménager selon l'une des revendications 1 à 5, **caractérisé en ce que** le carter (8) et la partie de pose (9) sont des composants distincts.

9. Robot ménager selon l'une des revendications précédentes, **caractérisé en ce que** la partie de pose (9) est creuse et ouverte vers le bas.

10. Robot ménager selon l'une des revendications précédentes, **caractérisé en ce que** la partie de pose (9) est exécutée au moins partiellement de manière élastique.

11. Robot ménager selon l'une des revendications précédentes, **caractérisé en ce qu'**au moins trois pieds (4, 5) sont disposés sur la base (3) et **en ce qu'**un capteur (13) du dispositif de pesage (6) est disposé dans chaque pied (4, 5).
